# DEMANDE DE BREVET EUROPEEN

(11) **EP 1 107 523 A1**
(43) Date de publication de la demande: **13.06.2001**
(21) Numéro de dépôt: 00403417.9
(22) Date de dépôt: 06.12.2000
(51) Int. Cl.: H04L 12/66, H04L 29/06

(54) **Passerelle de télécommunication entre un réseau privé et un réseau mobile**

(30) Priorité: 06.12.1999 FR 9915361
(71) Demandeur: ALCATEL, 75008 Paris (FR)
(72) Inventeur: Gruner, Richard, 67600 Selestat (FR); Bertrand, Daniel, 67114 Eschau (FR); Lingat, Antoine, 67210 Obernai (FR); Vallet, Eric, 78000 Versailles (FR); De Loye, Martin, 92310 Sevres (FR); Deprun, Jean-François, 75010 Pariss (FR)
(74) Mandataire: Sciaux, Edmond

(57) **Abrégé**

L'invention a pour but de fournir les services disponibles dans un réseau privé (14) à un utilisateur d'un terminal mobile (12) connecté à un réseau mobile (10) public ou privé. A cette fin, elle propose une passerelle (22) de télécommunications, qui se connecte entre l'échangeur du réseau privé (14) et le réseau mobile. La passerelle convertit les données de signalisation provenant de l'échangeur (16) du réseau privé (14) vers un format compatible avec un protocole permettant la transmission d'informations et de services vers et depuis un terminal mobile, par exemple le protocole WAP. Elle transmet ensuite les données de signalisation converties vers le terminal mobile (12) à travers le réseau mobile. En sens inverse, la passerelle convertit les données de signalisation provenant du terminal mobile vers un format compatible avec l'échangeur, et elle transmet les données de signalisation converties vers l'échangeur.

L'invention rend possible l'utilisation des services du réseau privé - renvois, appel par nom, etc - depuis un terminal mobile.

## Description

La présente invention concerne les terminaux mobiles de réseaux de télécommunications, et plus précisément, les services de réseaux privés disponibles sur les terminaux mobiles.

Les réseaux mobiles de télécommunications sont connus en soi. On peut notamment citer comme exemple de tels réseaux les réseaux suivant les normes GSM ou DECT.

Il existe par ailleurs divers types de réseaux privés. Ces réseaux privés fournissent des services spécifiques et par exemple des services d'appel par nom, de gestion des renvois, de messages, de rappel sur poste occupé, etc.

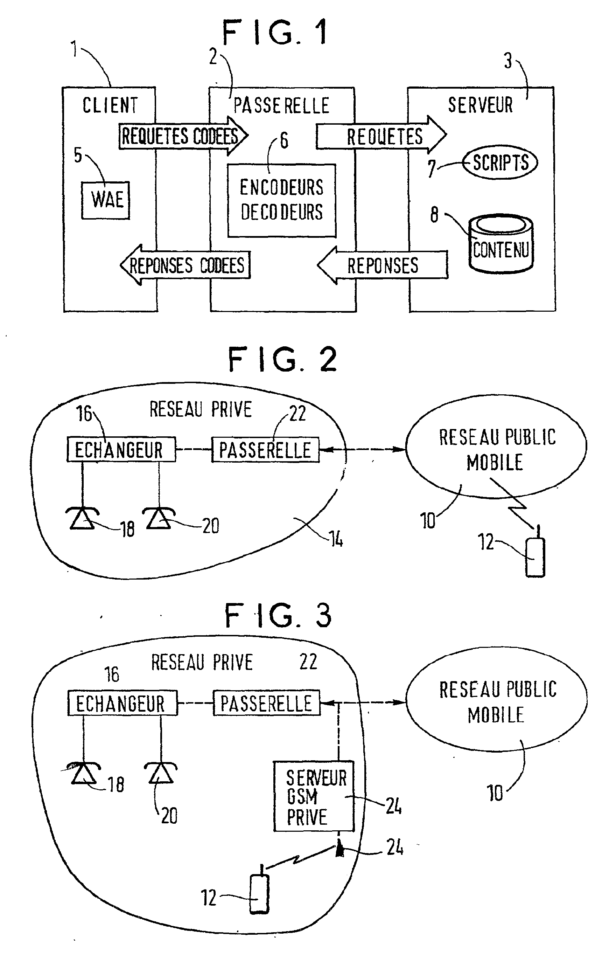

Les différents acteurs dans l'industrie des télécommunications sans fil ont formé le Wireless Application Protocol Forum (www.wapforum.org). L'objet de cette organisation est de faire évoluer le protocole appelé "Wireless Application Protocol" ou "WAP". Ce protocole permet d'offrir des services de données, et notamment des services Internet sur des terminaux mobiles, et notamment sur les terminaux numériques des réseaux de télécommunications sans fil. La **figure 1**, qui est extraite du document WAP White paper, Wireless Internet today, June 1999 montre le modèle de programmation WAP, qui est un des éléments clés de la spécification WAP. Comme le montre la figure, le modèle de programmation WAP gère les échanges de données entre un client 1 et un serveur classique 3, à travers une passerelle 2. Dans la couche application, le client présente un environnement 5 appelé "WAE" ou "Wireless Application Environment" (environnement d'application sans fil en langue anglaise). La passerelle 2 présente des encodeurs et des décodeurs 6 de sorte à communiquer avec le client d'une part, dans un langage défini dans la spécification, et avec les serveurs d'autres part. Le serveur présente classiquement des scripts et autres 7, ainsi que du contenu 8.

Des requêtes encodées au format WAP sont transmises par le client 1 vers la passerelle 2; elles y sont décodées et transmises vers le serveur 3. En sens inverse, la réponse - le contenu fourni par le serveur - est transmise par le serveur vers la passerelle 2, où elle est encodée au format WAP; la réponse est ensuite transmise vers le client 1.

Des serveurs WAP sont apparus sur le marché. La société Nokia a par exemple publié en Juin 1999 une feuille de description de produit concernant le "Nokia WAP Server". Ce produit est une passerelle entre des serveurs du Web accédés via Internet ou Intranet et des terminaux mobiles, qui utilisent le protocole WAP. Il permet un accès des terminaux mobiles aux données des serveurs.

En France, l'opérateur SFR du réseau public de téléphonie mobile propose aux abonnés des services d'information, utilisant un protocole WAP pour la transmission des informations vers les terminaux des utilisateurs. Ce service est commercialisé sous l'appellation "e-media".

Un problème nouveau pour les utilisateurs des services fournis par des réseaux privés est de pouvoir continuer à utiliser de tels services, même lorsqu'ils ne sont pas reliés au réseau privé et qu'ils utilisent un terminal mobile.

L'invention propose une solution à ce problème nouveau. Elle permet à un utilisateur d'un terminal mobile de disposer sur son terminal des services habituellement offerts par un réseau privé; il est par exemple possible pour l'utilisateur de gérer des renvois d'appels, d'appeler par nom, ou de mettre en oeuvre les autres services.

Plus précisément, l'invention propose une passerelle de télécommunications, présentant
- des moyens de connexion à un échangeur d'un réseau privé;
- des moyens de connexion à un réseau mobile ;
- des moyens pour convertir des données de signalisation provenant des dits moyens de connexion à un échangeur vers un format compatible avec un protocole permettant la transmission d'informations et de services vers et depuis un terminal mobile, et pour transmettre les données de signalisation converties vers les moyens de connexion à un réseau mobile;
- des moyens pour convertir des données de signalisation dans le dit format provenant des dits moyens de connexion à un réseau mobile vers un format compatible avec un échangeur, et pour transmettre les données de signalisation converties vers les moyens de connexion à un échangeur.

Dans un mode de réalisation, le protocole permettant la transmission d'informations et de services vers et depuis un terminal mobile est le protocole WAP.

L'invention concerne aussi un système de télécommunication, comprenant :
- une telle passerelle ;
- un réseau privé avec un échangeur connecté aux moyens de connexion à un échangeur de la dite passerelle ;
- un réseau mobile connecté aux moyens de connexion à un réseau mobile de la dite passerelle.

Dans un mode de réalisation, le réseau mobile est un réseau mobile public. Dans un autre mode de réalisation, le réseau mobile est un réseau mobile privé.

L'invention concerne enfin un procédé pour fournir les services d'un échangeur d'un réseau privé à un utilisateur d'un terminal mobile connecté à un réseau mobile, comprenant les étapes de :
- conversion de données de signalisation provenant de l'échangeur vers un format compatible avec un protocole permettant la transmission d'informations et de services vers et depuis un terminal mobile;
- transmission des données de signalisation converties vers le terminal mobile à travers le réseau mobile;
- conversion de données de signalisation dans le dit format provenant du terminal mobile à travers le réseau mobile vers un format compatible avec un échangeur, et
- transmission des données de signalisation converties vers l'échangeur.

De préférence, le dit protocole est un protocole WAP.

La passerelle et le procédé selon l'invention, permettent en particulier de mettre en oeuvre un nouveau service qui est caractérisé en ce que, pour établir une communication vocale à partir d'un terminal mobile connecté à un réseau radiotéléphonique public, vers un autre terminal, il consiste à :
- établir une communication de transmission de données entre le terminal mobile et une passerelle, via le réseau radiotéléphonique public ;
- exécuter un script dans cette passerelle pour commander un échangeur de façon à rappeler ce terminal mobile et appeler cet autre terminal, puis établir une communication vocale entre ces deux terminaux.

D'autres avantages et caractéristiques de l'invention apparaîtront à la lecture de la description qui suit de modes de réalisation de l'invention, donnée à titre d'exemple uniquement et en référence aux dessins annexés, qui montrent :
figure 1, un schéma de principe du modèle de programmation WAP;
figure 2, un schéma de principe d'un premier mode de réalisation de l'invention;
figure 3, un schéma de principe d'un second mode de réalisation de l'invention;
figure 4, un schéma de principe d'une passerelle selon l'invention ;
figure 5, illustre une application de la passerelle selon l'invention.

L'invention permet à un utilisateur d'un terminal mobile d'accéder aux services fournis habituellement par un réseau privé aux différents postes fixes connectés au réseau. Pour cela, l'invention propose de fournir les services à l'utilisateur à travers le réseau public ou privé auquel est connecté le terminal mobile. A cette fin, l'invention propose d'utiliser le protocole WAP - ou un autre protocole du même effet - pour transmettre vers l'utilisateur les services. Le réseau privé fournissant les services est relié à travers une passerelle au réseau public ou privé auquel est connecté le terminal mobile.

Dans la suite de la description, l'invention est décrite en référence au protocole WAP. Elle n'est pas limitée à ce protocole, mais s'applique plus généralement à tout protocole permettant la transmission vers et depuis un terminal mobile d'informations et de services.

La **figure 2** montre un schéma de principe d'un premier mode de réalisation de l'invention. Dans ce mode de réalisation, l'invention est décrite dans le cas d'un terminal mobile connecté à un réseau public. La figure représente schématiquement le réseau public 10, le terminal mobile 12 et un réseau privé 14. Le réseau privé présente un échangeur privé 16, auxquels sont connectés divers terminaux fixes 18, 20. L'échangeur permet à des utilisateurs de terminaux fixes 18, 20 d'accéder à des services, et par exemple des services d'appel par nom, de gestion de renvois, de message; le réseau privé peut encore assurer des services de taxation, outre les fonctions d'acheminement des communications connus en soi.

L'objet de l'invention est de permettre à l'utilisateur du terminal mobile 12 d'accéder aux services du réseau privé. A cette fin, l'invention propose d'utiliser une passerelle 22 entre l'échangeur et le réseau public mobile, pour transmettre vers le terminal mobile et recevoir à partir de celui-ci les données de signalisation; la passerelle utilise vers le terminal mobile le format WAP; l'invention peut donc être mise en oeuvre facilement, sans modification des terminaux ou conséquences sur le réseau public.

Le fonctionnement de l'invention est le suivant. Dans le sens depuis l'échangeur vers le terminal mobile, les données de signalisation fournies par l'échangeur privé sont fournies à la passerelle; celle-ci convertit les donnés en données au protocole WAP susceptibles d'être transmises au terminal mobile à travers le réseau public. Les données converties sont transmises au réseau mobile 10, et vers l'utilisateur.

L'utilisateur reçoit sur le terminal les données de signalisation fournies par l'échangeur à travers la passerelle; il peut répondre par émission d'autres données de signalisation, toujours au format WAP. Ces données sont transmises à travers le réseau public 10 vers la passerelle 22. Celle-ci convertit les données de signalisation reçues depuis le mobile en données à un format compatible avec l'échangeur, et transmet les données à l'échangeur.

Cet échange de données de signalisation, expliqué dans un sens et dans l'autre, permet à l'utilisateur du terminal mobile d'utiliser les services de l'échangeur du réseau privé, sans être physiquement relié au réseau privé. Il est clair que l'utilisation des services de l'échangeur peut s'effectuer à l'aide de plus de deux échanges de données de signalisation.

On donne maintenant divers exemples des services qui peuvent être fournis à l'utilisateur d'un terminal mobile. Ces services peuvent être des services directement relatifs au terminal mobile de l'utilisateur, ou peuvent aussi être des services relatifs à un terminal fixe du réseau privé affecté à l'utilisateur du terminal mobile; dans ce dernier cas, le terminal fixe peut être un terminal fixe réel - le terminal fixe du bureau de l'utilisateur du terminal mobile- ou encore un terminal fixe virtuel - un numéro de terminal affecté par l'échangeur du réseau privé à l'utilisateur, sans qu'il n'existe réellement de terminal physique correspondant. On notera que l'utilisateur du terminal mobile, pour établir une connexion au protocole WAP avec l'échangeur à travers la passerelle est identifié, de telle sorte qu'il est possible pour l'échangeur de déterminer quel est le terminal fixe du réseau privé qui appartient à l'utilisateur du terminal mobile.

Un premier exemple est la programmation des caractéristiques du terminal du réseau privé. A partir de son terminal mobile, l'utilisateur peut programmer des fonctions du terminal fixe, et par exemple, activer ou désactiver des renvois d'appel; on peut autoriser les renvois d'appels vers d'autres terminaux du réseau privé, ou vers des terminaux extérieurs au réseau privé. Les autres fonctions de programmation du terminal fixe du réseau privé habituellement accessibles sur le terminal fixe peuvent aussi être proposées à l'utilisateur du terminal mobile : programmation de numéros d'appel etc.

Un deuxième exemple est la fonction d'appel par nom depuis le terminal mobile. Dans ce cas, l'échangeur transmet vers le terminal mobile les différents noms des abonnés du réseau privé; il est alors possible pour l'utilisateur du terminal mobile de sélectionner un nom et d'effectuer l'appel correspondant. Bien entendu, le terminal mobile n'est pas directement relié au réseau privé, mais est relié au réseau public. L'appel par nom est rendu possible grâce aux moyens décrits dans la demande de brevet EP-A-0 944 270 : comme expliqué dans cette demande de brevet, en cas d'appel par nom, l'utilisateur du terminal mobile sélectionne le nom d'un destinataire; le terminal compose en fait un numéro d'accès à l'échangeur, et transmet à l'échangeur les informations nécessaires au routage de l'appel à travers le réseau privé vers le destinataire de l'appel.

D'autres exemples de fonctions peuvent être la consultation de demandes de rappel ou d'appels non répondus, la consultation de messages écrits ou vocaux, la redirection de fax (demande d'impression sur le fax le plus proche après consultation des coordonnées de l'expéditeur du l'écran du GSM), etc.

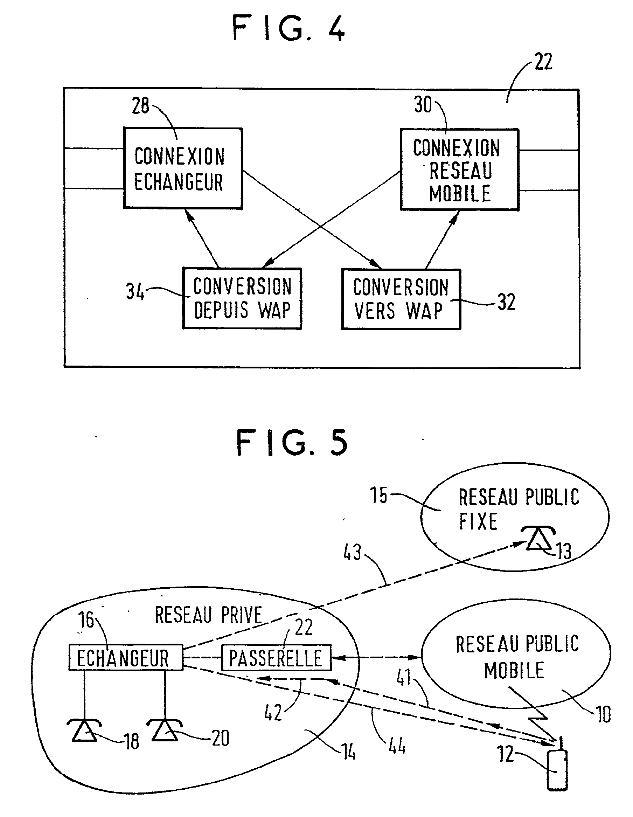

La **figure 3** montre un schéma de principe d'un second mode de réalisation de l'invention. Dans le mode de réalisation de la figure 3, le terminal mobile n'est pas connecté au réseau public mobile, mais est connecté à un réseau privé sans fil. Apparaît donc sur la figure un serveur GSM privé 24 avec une station de base privée 26. Le terminal mobile 28 est connecté à la station de base 26. Le serveur GSM privé est relié à la passerelle, comme le réseau public l'était dans le mode de réalisation de la figure 2.

Le fonctionnement de l'invention dans ce mode de réalisation est exactement similaire au fonctionnement de l'invention dans le mode de réalisation de la figure 2, les mots "réseau public mobile" étant remplacés par "réseau privé mobile". Comme dans le mode de réalisation de la figure 2, l'invention de la figure 3 peut être mise en oeuvre sans modifications du serveur GSM privé, ni des terminaux, mais simplement en utilisant les fonctionnalités WAP de ces éléments.

La **figure 4** montre un schéma de principe d'une passerelle selon l'invention. La passerelle 22 présente des moyens 28 de connexion à un échangeur d'un réseau privé (14), dans un format classique, et par exemple suivant un protocole lP. Elle présente des moyens 30 de connexion à un réseau mobile. La passerelle présente des moyens 32 pour convertir des données de signalisation provenant d'un échangeur vers un format compatible avec un protocole WAP. Elle présente enfin des moyens 34 pour convertir des données de signalisation au format compatible WAP provenant des d'un utilisateur du réseau mobile vers un format compatible avec un échangeur.

Une grosse entreprise comporte généralement plusieurs sites qui ont des échangeurs téléphoniques reliés en réseau. Ces échangeurs utilisent des procédés d'optimisation des coûts pour choisir le meilleur chemin lorsqu'une communication doit être établie entre deux sites distants. Par exemple, il est moins coûteux de faire passer une communication par une ligne déjà louée par l'entreprise, dans le réseau public, plutôt que par une ligne quelconque du réseau public.

En sus des services classiques fournis par les échangeurs privés, la passerelle décrite ci-dessus permet de fournir un nouveau service qui consiste à permettre, à un employé d'une entreprise, de bénéficier de ces procédés d'optimisation des coûts, alors que cet employé est à l'extérieur de cette entreprise, et qu'il utilise un terminal GSM en se connectant à un réseau public de radiotéléphonie.

Au lieu de composer le numéro du poste appelé, cet employé compose un numéro appelant la passerelle, pour établir une communication de transmission de données selon le protocole WAP. L'échangeur envoie au terminal une page permettant de choisir différent services, et en particulier un annuaire personnel. L'usager choisit le numéro qu'il veut appeler, puis il interrompt cette communication. L'échangeur fait ensuite deux rappels : l'un vers le poste appelé et l'autre vers cet usager.

La **figure 5** illustre ce nouveau service. Pour mettre en oeuvre ce procédé, la passerelle 22 comporte des moyens logiciels pour exécuter un script envoyant un ordre à l'échangeur 16 pour initialiser deux rappels : vers le poste appelé et l'autre vers cet usager.

Ces moyens sont activés par un appel d'un terminal mobile, tel que le terminal 12, lorsque ce terminal demande l'établissement d'une communication avec un autre terminal qui n'appartient pas au réseau privé 14, par exemple le terminal fixe 13 du réseau public fixe 15. Pour appeler un poste du réseau privé 14, le procédé est le même.

La séquence des opérations est la suivante :
- 41 : Le terminal 12 établit une communication de transmission de données, avec la passerelle 22 du réseau privé 14, via le réseau public mobile 10. La passerelle 22 envoie une page en langage WML, et selon le protocole WAP, au terminal 12. Cette page est affichée par le terminal 12 et permet à l'usager de choisir certains services disponibles sur cet échangeur 16, en particulier un annuaire personnel. L'usager choisit par exemple d'accéder à cet annuaire, et choisit dans cet annuaire le numéro du terminal 13 à appeler. Chaque commande est transmise à la passerelle 22 en langage WML, et selon le protocole WAP.
- 42 : la passerelle 22 exécute un script envoyant un ordre à l'échangeur 16.
- 43 : cet ordre initialise un rappel 43 en direction du terminal 13.
- 44 : cet ordre initialise aussi un rappel 44 en direction du terminal 12.

L'échangeur 16 met ensuite les terminaux 12 et 13 en communication vocale. Le coût de la communication vocale entre ces deux terminaux est imputé au réseau privé 14. Le coût de la communication est généralement plus faible que si l'usager avait appelé directement le poste 13 par le réseau public.

Tout terminal radiotéléphonique GSM comprenant des moyens pour émettre et recevoir des données conformes au protocole WAP, puis des signaux vocaux, peut utiliser la passerelle selon l'invention, et ce nouveau service.

Bien entendu, l'invention n'est pas limitée aux modes de réalisation décrits et représentés; on peut notamment fournir à l'utilisateur du terminal mobile des services de l'échangeur autres que ceux qui sont donnés plus haut à titre d'exemple. Dans le mode de réalisation de la figure 3, le réseau privé 14 comprend à la fois un échangeur et un serveur GSM privés ; mais dans d'autres exemples, ces dernier pourrait faire partie respectivement de deux réseaux privés distincts.

L'invention est décrite dans le cas du GSM, mais elle s'applique aussi à d'autres normes de télécommunication mobile.

## Revendications

1. Une passerelle (22) de télécommunications, présentant
- des moyens (28) de connexion à un échangeur d'un réseau privé (14) ;
- des moyens (30) de connexion à un réseau mobile (10; 24, 26);
- des moyens (32) pour convertir des données de signalisation provenant des dits moyens de connexion à un échangeur vers un format compatible avec un protocole permettant la transmission d'informations et de services vers et depuis un terminal mobile, et pour transmettre les données de signalisation converties vers les moyens (30) de connexion à un réseau mobile;
- des moyens (34) pour convertir des données de signalisation dans le dit format provenant des dits moyens de connexion (30) à un réseau mobile vers un format compatible avec un échangeur, et pour transmettre les données de signalisation converties vers les moyens (28) de connexion à un échangeur.

2. Une passerelle selon la revendication 1, caractérisé en ce que le protocole permettant la transmission d'informations et de services vers et depuis un terminal mobile est le protocole WAP.

3. Une passerelle selon l'une des revendications précédentes, caractérisée en ce qu'elle comporte des moyens pour exécuter un script envoyant un ordre à l'échangeur (16) pour initialiser un rappel de deux numéros distincts, puis établir une communication vocale entre les terminaux (12, 13) correspondant à ces deux numéros.

4. Un système de télécommunication, comprenant :
- une passerelle selon l'une des revendications précédentes ;
- un réseau privé (10) avec un échangeur (16) connecté aux moyens (28) de connexion à un échangeur de la dite passerelle;
- un réseau mobile (10; 24, 26) connecté aux moyens (30) de connexion à un réseau mobile de la dite passerelle.

5. Le système de la revendication 4, caractérisé en ce que le réseau mobile est un réseau mobile public (10).

6. Le système de la revendication 4, caractérisé en ce que le réseau mobile est un réseau mobile privé (24, 26).

7. Un procédé pour fournir les services d'un échangeur (16) d'un réseau privé (14) à un utilisateur d'un terminal mobile (12) connecté à un réseau mobile (10 ; 24, 26), comprenant les étapes de :
- conversion de données de signalisation provenant de l'échangeur vers un format compatible avec un protocole permettant la transmission d'informations et de services vers et depuis un terminal mobile;
- transmission des données de signalisation converties vers le terminal mobile (12) à travers le réseau mobile (10; 24, 26);
- conversion de données de signalisation dans le dit format provenant du terminal mobile (12) à travers le réseau mobile vers un format compatible avec un échangeur, et
- transmission des données de signalisation converties vers l'échangeur (16).

8. Le procédé de la revendication 7, caractérisé en ce que le dit protocole est un protocole WAP.

9. Le procédé selon l'une des revendications 7 ou 8, caractérisé en ce que, pour établir une communication vocale à partir d'un terminal mobile (12) connecté à un réseau radiotéléphonique public, vers un autre terminal (13), il consiste à :
- établir une communication de transmission de données (41) entre le terminal mobile (12) et une passerelle (22), via un réseau radiotéléphonique public (10) ;
- exécuter un script dans cette passerelle (22) pour commander un échangeur (16) de façon à rappeler ce terminal mobile (12) et appeler cet autre terminal (13), puis établir une communication vocale entre ces deux terminaux.

10. Le procédé selon la revendication 9, caractérisé en ce qu'il consiste en outre à envoyer de l'échangeur (16) à ce terminal mobile (12) une page constituant un annuaire téléphonique permettant de choisir le numéro de l'autre terminal à appeler, pendant la communication de transmission de données.
